# FASCICULE DE BREVET EUROPEEN

(11) **EP 2 695 377 B1**
(45) Date de publication et mention de la délivrance du brevet: **28.10.2015**
(21) Numéro de dépôt: 12731558.8
(22) Date de dépôt: 12.06.2012
(51) Int. Cl.: H04N 5/3745, H04N 5/376, H01L 27/148

(54) **DETECTION DE DEBRIS SPATIAUX**
DETEKTION VON WELTRAUMSCHROTT
DETECTION OF SPACE DEBRIS

(30) Priorité: 21.06.2011 FR 1101909
(43) Date de publication de la demande: 12.02.2014
(73) Titulaire: Airbus Defence and Space SAS, 78130 Les Mureaux (FR)
(72) Inventeur: TULET, Michel, F-31130 Balma (FR)
(74) Mandataire: Cabinet Plasseraud
(86) Numéro de dépôt international: PCT/FR2012/051316
(87) Numéro de publication internationale: WO 2012/175842

(56) Documents cités:
- WO-A2-2005/104527
- WO-A2-2006/073875
- JP-A- 2003 032 552
- JP-A- 2005 217 471
- US-A1- 2005 012 838
- US-A1- 2009 066 782
- US-A1- 2010 259 626
- US-B1- 6 753 904

## Description

La présente invention concerne un dispositif et un procédé de détection de débris spatiaux.

La détection des débris spatiaux est un enjeu important, notamment pour les satellites artificiels qui sont placés en orbite autour de la Terre. En effet, l'activité humaine dans l'espace a produit de très nombreux débris solides, qui restent en orbite autour de la Terre et sont susceptibles d'entrer en collision avec un satellite, et de l'endommager.

La détection d'un débris qui se rapproche du satellite, puis l'identification de sa trajectoire pour déterminer si une manoeuvre d'évitement est nécessaire, est rendue difficile notamment à cause de :
- la variété de taille des débris, de moins de 1 cm (centimètre) à plus de 10 cm ;
- leurs vitesses, qui peuvent dépasser 10 km/s (kilomètre par seconde) ;
- la variété de leurs trajectoires ;
- la variété de leurs formes ; et
- la variété de leurs aspects.

Pour ces raisons notamment, il n'est pas possible d'éclairer les débris avec une source de lumière qui serait embarquée à bord du satellite, pour augmenter la sensibilité du procédé qui est mis en oeuvre pour détecter ces débris.

En outre, le domaine spatial à l'intérieur duquel la présence de débris doit être observée est couramment très grand. Par exemple, ce domaine d'observation peut être approximativement une couche sphérique de 100 km d'épaisseur à une altitude de 800 km au dessus du sol terrestre.

Pour ces raisons, il est nécessaire qu'un dispositif de détection de débris spatiaux soit efficace à l'intérieur d'un champ d'observation instantané qui soit large, et avec une fréquence de séquence de détection qui soit élevée.

Or de telles conditions d'imagerie aboutissent à un débit considérable de données d'images, dont le traitement par les méthodes usuelles n'est pas compatible avec la contrainte de surveillance en temps réel des débris, ni avec un coût limité pour le dispositif de détection.

Le brevet US 6 753 904 décrit un dispositif et un procédé de détection de mouvements dans lesquels des comparateurs de lectures successives des pixels sont dédiés respectivement aux colonnes de la matrice de détection d'image. Donc, chaque circuit de détection de la variation du signal de pixel est partagé par une colonne de pixels la matrice.

La demande de brevet US 2009/0066782 divulgue un capteur d'images avec un dispositif de détection de mouvement qui sert à la détermination d'une région d'intérêt (ROI). La détection de mouvement s'effectue sur la base de la différence entre les signaux de deux cadres successifs, à l'aide d'un circuit de comparaison dédié à la matrice entière.

Un but de la présente invention consiste alors à fournir un nouveau dispositif de détection des débris spatiaux, qui soit plus performant que les dispositifs déjà connus.

Plus précisément, certains des buts de l'invention sont :
- réaliser une détection de débris avec une valeur pour la probabilité de détection d'un débris qui soit la plus élevée possible, et une valeur pour la probabilité de fausse détection qui soit la plus faible possible ;
- effectuer la détection en temps réel par rapport au fonctionnement d'un capteur optique qui est utilisé, afin d'obtenir une surveillance continue de l'environnement du satellite ;
- que la fréquence d'exécution de la séquence élémentaire de détection soit suffisamment élevée pour obtenir une sécurité suffisante pour le satellite ;
- que le coût et le poids du dispositif de détection des débris soient limités.

Dans le jargon de l'Homme du métier, la probabilité de fausse détection, aussi appelée probabilité de fausse alarme, caractérise la probabilité pour qu'un résultat positif qui est délivré par le dispositif ne corresponde pas à un débris qui existe réellement.

Pour atteindre ces objectifs et d'autres, l'invention propose un dispositif de détection de débris spatiaux qui est destiné à être embarqué à bord d'un satellite ou d'un engin spatial, et qui comprend :
- un capteur d'image, comprenant lui-même un ensemble d'éléments de détection de points d'image («pixel detection elements» en anglais) qui sont disposés à des intersections de lignes et de colonnes d'une matrice du capteur d'image ;
- une unité de commande, qui est adaptée pour contrôler un fonctionnement du capteur d'image selon un mode continu de lecture ligne-à-ligne («rolling mode») ; et
- une unité de traitement d'image, qui est connectée pour recevoir des données d'image produites par l'unité de commande.

A l'intérieur du capteur d'image qui est utilisé selon l'invention pour le dispositif de détection des débris spatiaux, chaque élément de détection de point d'image comprend les composants suivants, séparément des autres éléments de détection de points d'image :
- un composant photosensible, adapté pour accumuler un signal électrique pendant une durée d'intégration en fonction d'une intensité lumineuse qui est reçue par ce composant photosensible ;
- un système de soustraction, agencé pour produire un signal différentiel correspondant à une différence entre deux signaux électriques qui ont été accumulés par le composant photosensible pendant deux durées d'intégration successives ;
- un système comparateur, qui est adapté pour comparer le signal différentiel avec un seuil, et pour produire un résultat binaire de variation de point d'image ; et
- une mémoire de sortie, qui est adaptée pour stocker le résultat binaire de variation de point d'image.

Autrement dit, le capteur d'image est pourvu de fonctions supplémentaires qui sont intégrées dans chaque élément de détection de point d'image, pour exécuter des opérations en parallèle à l'intérieur d'une même ligne. Une telle architecture permet d'exécuter ces opérations en temps réel pendant le fonctionnement du dispositif, au fur et à mesure que les lignes sont acquises continuellement.

Selon des caractéristiques supplémentaires de l'invention, l'unité de commande est adaptée pour lire les mémoires de sortie de certains au moins des éléments de détection de points d'image appartenant à une même ligne de la matrice du capteur d'image, successivement pour chaque ligne. En outre, l'unité de commande détermine, lorsqu'au moins un résultat binaire de variation de point d'image est positif pour l'un des éléments de détection de points d'image de la ligne, la colonne de la matrice du capteur d'image à laquelle appartient cet élément au résultat positif de variation de point d'image. Un code qui est utilisé pour caractériser cette colonne dans la matrice du capteur d'image forme alors une donnée d'image qui est transmise par l'unité de commande à l'unité de traitement d'image.

Ainsi, le dispositif de détection de débris spatiaux selon l'invention délivre une information d'image qui est réduite. Cette information peut être limitée seulement à des coordonnées de colonnes du capteur d'image, qui correspondent à des portions du champ d'observation dans lesquelles des variations de contenus d'images ont été détectées entre deux trames successives. Cette information est réduite et facile à traiter ultérieurement. Notamment, elle peut être suffisante pour en déduire des informations sur la trajectoire d'un débris qui est détecté, et son risque de collision avec le satellite ou l'engin spatial. En particulier, la transmission vers l'unité de traitement d'image du contenu d'image analogique pour une grande partie des éléments de détection de points d'image, ou leur totalité, est supprimée. Cette suppression réduit dans une proportion considérable la quantité des données à traiter, notamment lorsque l'unité de traitement d'image est réalisée dans un circuit séparé de celui du capteur d'image. Grâce à cette réduction, l'information de surveillance de l'environnement qui est recueillie peut être traitée en temps réel et continûment pendant que l'acquisition en mode continu ligne-à-ligne est poursuivie, et ceci avec un coût et un poids du dispositif qui sont limités.

En particulier, lorsque chaque ligne de la matrice du capteur d'image comprend au moins 500 éléments de détection de points d'image, le dispositif peut être adapté pour traiter une nouvelle ligne d'éléments de détection de points d'image selon une fréquence de traitement de ligne qui est supérieure à 1 MHz (mégahertz).

De façon similaire, lorsque la matrice du capteur d'image comprend au moins 500 lignes et au moins 500 colonnes d'éléments de détection de points d'image, le dispositif peut être adapté pour balayer successivement toutes les lignes de la matrice du capteur d'image selon une fréquence de trame qui est supérieure à 5 kHz (kilohertz).

De telles fréquences d'acquisition pour les lignes ou les trames permettent une détection efficace et rapide des débris spatiaux, et par suite une surveillance efficace de l'environnement du satellite ou de l'engin spatial.

L'invention propose aussi un procédé de détection de débris spatiaux, qui comprend les étapes suivantes :
- embarquer au moins un dispositif de détection de débris spatiaux tel que décrit précédemment, à bord d'un satellite ou d'un engin spatial ;
- orienter un champ d'observation du dispositif de sorte que le capteur d'image reçoive un rayonnement qui est produit par le Soleil et serait réfléchi ou diffusé par un débris spatial situé dans le champ d'observation ; et
- activer le dispositif de sorte que le débris spatial provoque un résultat positif de variation de point d'image pour au moins un élément de détection de point d'image.

Un tel procédé est particulièrement économique et efficace, en ce qu'il utilise la lumière solaire pour éclairer les débris spatiaux. De cette façon, le contraste de détection de ces débris par le capteur d'image peut être augmenté. La probabilité de détection d'un débris est ainsi elle-même augmentée, et la probabilité de fausse détection est réduite.

D'autres particularités et avantages de la présente invention apparaîtront dans la description ci-après d'exemples de réalisation non limitatifs, en référence aux dessins annexés, dans lesquels :
- la figure 1 est un diagramme synoptique d'un dispositif de détection de débris conforme à la présente invention ;
- la figure 2 correspond à la figure 1 pour un perfectionnement de l'invention ;
- la figure 3 est un diagramme synoptique des fonctions qui sont intégrées à chaque élément de détection de point d'image, dans le dispositif de la figure 1 ; et
- la figure 4 illustre des conditions de mise en oeuvre d'un dispositif de détection de débris conforme à la présente invention, à bord d'un satellite artificiel.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

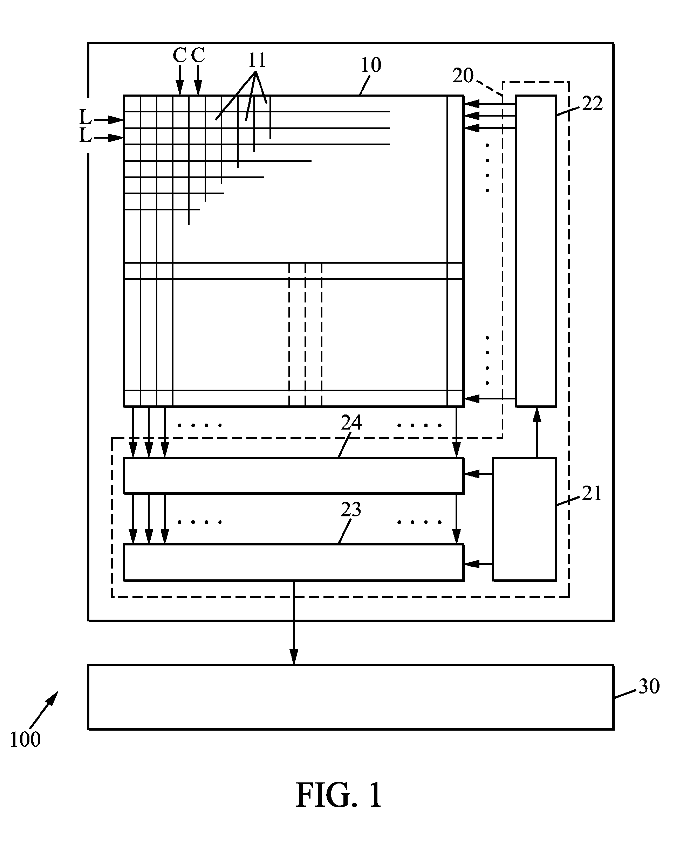

Conformément à la figure 1, un dispositif de détection d'image qui est désigné globalement par la référence 100, comprend un capteur d'image 10, une unité de commande 20 et une unité de traitement d'image 30. De façon connue, le capteur 10 et l'unité de commande 20 sont avantageusement réalisés sur un même substrat de circuit CMOS. L'unité de traitement d'image 30 peut être réalisée sous forme d'un circuit qui est séparé, et qui est connecté à des sorties du circuit du capteur 10 et de l'unité de commande 20.

Le capteur d'image 10 comprend une matrice d'éléments de détection de points d'image 11, qui sont disposés aux intersections de lignes L et de colonnes C dans une portion de surface exposée. Par exemple, le capteur d'image 10 comprend 4000 lignes L et 4000 colonnes C d'éléments de détection de points d'image 11. Les lignes L et les colonnes C peuvent avoir chacune une largeur de 20 µm (micromètre), si bien que la surface utile de détection du capteur d'image 10 possède les dimensions 80 mm (millimètre) x 80 mm.

Le dispositif 100 peut être associé à une optique de formation d'image (non représentée), qui est agencée pour former une image d'un champ d'observation sur la surface exposée de détection du capteur 10. Par exemple, l'optique de formation d'image peut avoir une longueur de distance focale de 650 mm et une ouverture de f/4,3. Dans ces conditions qui ne sont données qu'à titre d'illustration, le champ d'observation de l'ensemble de détection des débris spatiaux qui comprend l'optique et le dispositif 100 possède une ouverture angulaire de 14°. Sa résolution est supérieure à 10 cm pour une distance d'éloignement d'un débris de 1,5 km (kilomètre), ou égale à 123 cm pour une distance d'éloignement de 20 km.

L'unité de commande 20 peut comprendre de façon usuelle un séquenceur principal 21, un séquenceur de lignes 22, et un codeur de colonnes 23. Elle est adaptée pour contrôler un fonctionnement du dispositif 100 en mode «rolling», ou mode continu de lecture ligne-à-ligne. Un tel mode de saisie d'image est connu de l'Homme du métier, si bien qu'il est suffisant de n'en rappeler que le principe ici. Les lignes L d'éléments de détection de points d'image 11 sont lues successivement une à une, en étant reprises selon un balayage périodique de toutes les lignes de la matrice du capteur d'image 10. Chaque balayage de toute la matrice définit une trame d'image, et un dispositif 100 conforme à la description détaillée qui suit peut être adapté pour produire et traiter les trames d'image à une fréquence de trame de l'ordre de 8 kHz (kilohertz).

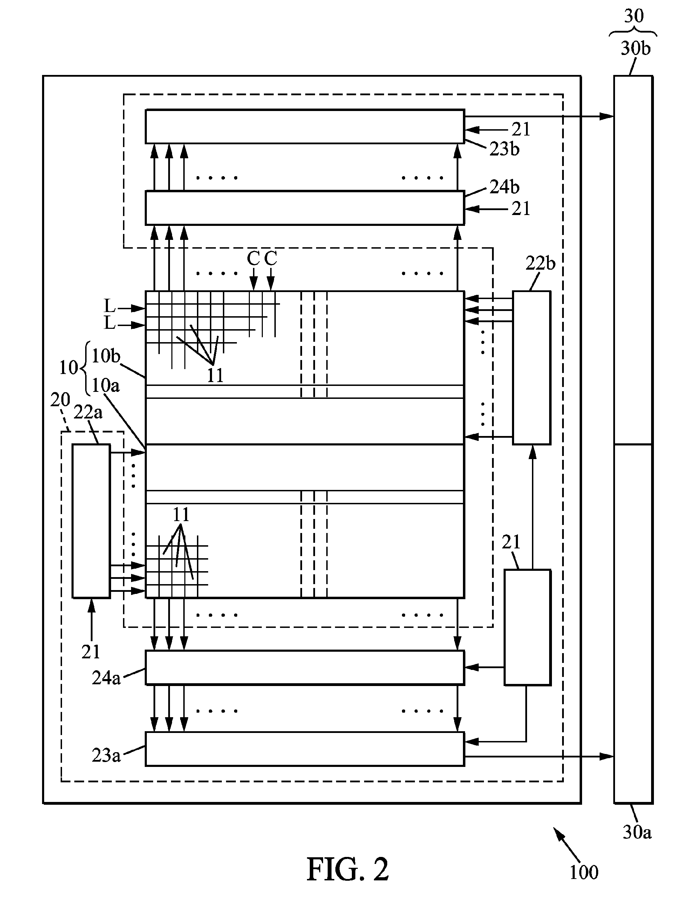

La figure 2 illustre une variante de la structure du dispositif 100 de la figure 1, qui permet d'augmenter la fréquence de production et de traitement des trames. Dans cette variante, certains des éléments de l'unité de commande 20 sont dupliqués, et leurs références sont complétées par a ou b d'une façon qui est compréhensible en soi. La matrice du capteur d'image 10 peut alors être divisée en deux moitiés de matrice 10a et 10b, qui sont contrôlées simultanément et en parallèle chacune selon le mode «rolling». Des divisions supérieures de la matrice du capteur d'image 10 peuvent être mise en oeuvre selon le même principe, pour augmenter encore la fréquence de production et de traitement des trames. Simultanément ou indépendamment, l'unité de traitement d'image 30 peut comprendre plusieurs sous-unités de traitement, par exemple deux sous-unités 30a et 30b, qui sont affectées respectivement à des sous-ensembles complémentaires de lignes L de la matrice du capteur d'image 10, par exemple les sous-ensembles de lignes 10a et 10b.

Pour l'invention, chaque élément de détection de point d'image 11 comporte, en plus du composant photosensible, des composants CMOS additionnels qui réalisent des opérations élémentaires à partir du signal électrique d'accumulation qui est produit par le composant photosensible. Le résultat de ces opérations est de nature binaire, et peut être transmis à l'unité de traitement 30 d'une façon qui sera décrite plus loin. Ce mode opératoire permet de réduire la quantité d'information d'image qui est manipulée pour chaque trame, afin d'atteindre des valeurs élevées pour la fréquence de production et de traitement des trames. La nature numérique («digital» en anglais) des données d'image qui sont transmises à l'unité de traitement 30 contribue aussi à l'obtention de cette fréquence élevée.

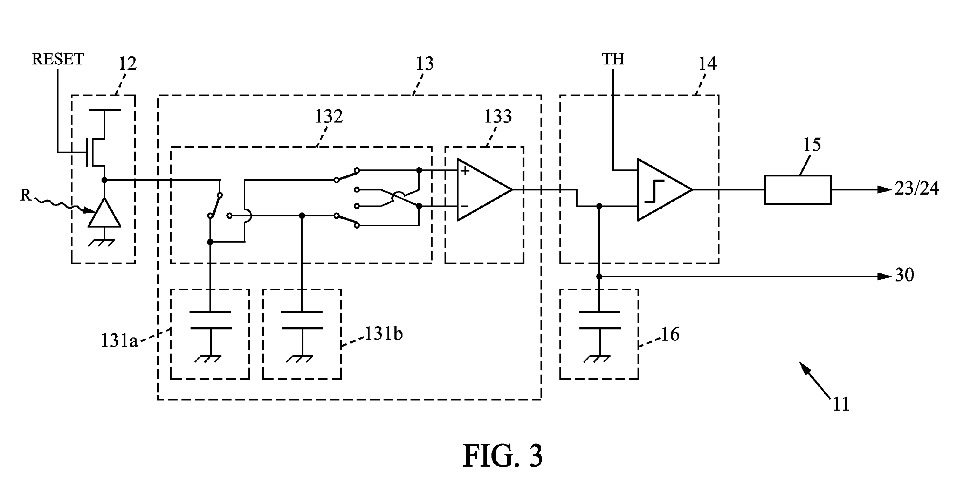

La figure 3 illustre l'enchaînement de ces opérations élémentaires qui sont réalisées au sein de chaque élément de détection de point d'image 11, pour chaque trame produite. Pour un fonctionnement de base de l'invention, chaque élément 11 comporte individuellement les éléments fonctionnels suivants :
- le composant photosensible qui est référencé 12, y compris son circuit de réinitialisation noté «RESET», et qui produit un signal électrique d'accumulation proportionnel à l'intensité de rayonnement qu'il a reçue pendant une durée d'intégration ;
- un système de soustraction 13, qui réalise une soustraction entre le signal électrique d'accumulation pour la trame en cours d'acquisition, et celui de la trame précédente afin de produire un signal différentiel ;
- un système comparateur 14, qui compare le signal différentiel produit par le système de soustraction 13 avec un seuil fixe, noté TH pour «threshold» en anglais, pour produire un résultat binaire de comparaison appelé résultat de variation de point d'image ; et
- une mémoire de sortie 15 de l'élément de détection de point d'image 11, pour stocker le résultat binaire de variation de point d'image jusqu'à sa lecture par l'unité de commande 20.

Le composant photosensible 12 peut être notamment une photodiode. Dans un mode de réalisation préféré, le capteur d'image 10 peut être sensible pour un rayonnement de longueur d'onde comprise entre 0,4 µm (micromètre) et 0,8 µm.

Les signaux qui sont transmis entre le composant photosensible 12 et le système de soustraction 13, ainsi qu'entre ce dernier et le système comparateur 14 sont de nature analogique. Par opposition, le signal qui est produit par le système 14 et stocké dans la mémoire de sortie 15, est binaire. Ce signal de sortie d'élément de détection de point d'image correspond au résultat binaire de variation de point d'image pour chaque nouvelle trame. Il est égal à 1 lorsque l'intensité lumineuse reçue a varié d'une quantité supérieure au seuil fixé TH entre deux trames successives, et égal à zéro si cette variation est inférieure au seuil TH. Autrement dit, le signal binaire qui est stocké dans la mémoire 15 est un indicateur de variation ou d'absence de variation significative pour le point d'image entre deux trames successives.

La figure 3 montre une réalisation possible du système de soustraction 13. Selon cette réalisation, le système 13 peut comprendre deux mémoires de rétention 131 a et 131 b, du type échantillonnage-blocage ou «sample and hold» en anglais, un multiplexeur 132, et l'opérateur soustracteur 133 lui-même. Le signal électrique d'accumulation est stocké dans l'une ou l'autre des mémoires 131a et 131b, alternativement entre deux trames successives, puis ces signaux stockés sont transmis aux entrées de l'opérateur soustracteur 133. Cette transmission est réalisée par le multiplexeur 132 en inversant les connexions d'entrée aux deux mémoires 131 a et 131 b, ainsi que les connexions entre ces mémoires 131 a, 131b et les deux entrées de l'opérateur 133, entre deux trames successives. De cette façon, une soustraction est obtenue de façon glissante entre chaque trame et sa trame juste précédente, en minimisant les manipulations de signaux analogiques.

D'autres réalisations du système de soustraction 13 peuvent être utilisées alternativement.

La mémoire de sortie 15 peut être du type à verrouillage, ou «latch» en anglais.

Selon un perfectionnement facultatif de l'invention, chaque élément de détection de point d'image 11 peut comprendre en outre une mémoire analogique, à l'intérieur du capteur d'image 10 et séparément des autres éléments de détection de point d'image. Cette mémoire analogique peut aussi être du type échantillonnage-blocage. Elle peut être agencée pour stocker le signal électrique qui est accumulé par le composant photosensible 12, auquel cas ce peut être l'ensemble des mémoires 131 a et 131b. Alternativement, la mémoire analogique peut stocker le signal différentiel qui est produit par le système de soustraction 13, auquel cas elle peut être agencée comme indiqué sur la figure 3 par la référence 16. Une telle mémoire supplémentaire constitue dans les deux cas une seconde sortie de l'élément de détection de point d'image 11, de nature analogique, en plus de la première sortie de chaque élément 11 que constitue la mémoire numérique 15. L'utilité d'une telle sortie analogique sera décrite plus loin, avec le fonctionnement de l'unité de traitement d'image 30.

Lors de la séquence de lecture d'une ligne L en mode «rolling», l'unité de commande 20 parcourt les mémoires de sortie 15 de certains au moins des éléments 11 de cette ligne, et identifie certains de ceux-ci pour lesquels le résultat binaire de variation de point d'image est positif. Autrement dit, l'unité 20 détermine certaines des colonnes C pour lesquelles une variation suffisante du contenu d'image a été détectée entre les deux expositions précédentes, à l'intérieur de la ligne L en cours de lecture. Le résultat de cette lecture qui est réalisée par l'unité 20 est un code, ou une adresse, qui caractérise la colonne C concernée parmi toutes les colonnes de la matrice.

Pour cela, plusieurs méthodes de lecture de chaque ligne L peuvent être mises en oeuvre alternativement pour minimiser le nombre d'opérations qui sont exécutées et la quantité de données d'image à traiter, tout en fournissant une information suffisante sur la présence et la localisation de débris spatiaux.

Selon une première de ces méthodes, qui est appelée mode de lecture FIL pour «first in line» en anglais, l'unité de commande 20 est adaptée pour déterminer uniquement la colonne C d'un premier élément de détection de point d'image 11 au résultat positif de variation de point d'image, selon un ordre fixé de lecture des éléments dans chaque ligne L. Une telle donnée d'image est réduite et ne génère en conséquence qu'une durée de traitement qui est très courte.

Selon une deuxième méthode, appelée mode de lecture FIL & LIL pour «first in line and last in line», l'unité de commande 20 est adaptée pour déterminer uniquement les colonnes C respectives d'un premier et d'un dernier élément de détection de point d'image 11 aux résultats positifs de variations de points d'image, selon deux ordres opposés de lecture des éléments dans chaque ligne L. Une telle donnée d'image est une indication de la portion minimale du champ d'observation dans laquelle se trouve au moins un débris spatial.

Pour d'autres méthodes possibles de lecture des lignes L, l'unité de commande 20 peut être adaptée pour traiter chaque ligne L selon une division de ligne en segments («blocks» en anglais) fixés. Elle détermine alors séparément et en parallèle à l'intérieur de chaque segment, la colonne C de la matrice du capteur d'image 10 à laquelle appartient un élément de détection de point d'image 11 au résultat positif de variation de point d'image. De telles méthodes sont adaptées lorsque l'unité de commande 20 comporte plusieurs encodeurs de colonnes qui réalisent séparément les lectures des mémoires de sortie 15, respectivement à l'intérieur de segments de ligne différents.

En particulier, l'unité de commande 20 peut être adaptée pour déterminer uniquement la colonne C d'un premier élément de détection de point d'image 11 au résultat positif de variation de point d'image, selon un ordre fixé de lecture des éléments 11 à l'intérieur de chaque segment. Ainsi, le mode de lecture FIL peut être utilisé à l'intérieur de chaque segment. Si chaque ligne L est découpée en deux segments, ceux-ci peuvent être parcourus préférentiellement en sens opposés. Alternativement, l'unité 20 peut déterminer les colonnes C respectives d'un premier et d'un dernier élément 11 aux résultats positifs de variations de points d'image, selon deux ordres opposés de lecture des éléments 11 à l'intérieur de chaque segment. Le mode de lecture FIL & LIL peut ainsi être mis en oeuvre indépendamment dans chaque segment de ligne L. Une donnée d'image plus complète est ainsi récupérée de chaque ligne L qui est lue, en fonction du mode de lecture qui est mis en oeuvre pour les mémoires de sortie 15.

Le perfectionnement de l'invention qui est maintenant décrit est destiné à réduire la probabilité de fausse détection, en plus de la comparaison avec le seuil TH qui est effectuée au sein de chaque élément de détection de point d'image 11. Il consiste en un filtrage spatial des contenus des mémoires de sortie 15, qui est effectué au sein de chaque ligne L juste avant qu'elle soit lue par l'encodeur de colonnes 23. Pour cela, l'unité de commande 20 peut comprendre en outre un module de filtrage 24 (figure 1) qui est agencé pour filtrer spatialement les résultats binaires de variations de points d'image à l'intérieur de chaque ligne. L'encodeur de colonnes 23 est alors connecté pour lire ces résultats binaires de variations de points d'image après que ceux-ci ont été filtrés. Un tel filtrage peut consister à ne conserver un résultat positif de variation de point d'image pour une première colonne, que si le résultat est aussi positif pour au moins une autre colonne voisine de la première avec une distance maximale prédéterminée entre les deux colonnes. De façon particulièrement avantageuse, le module de filtrage 24 peut être incorporé dans le même substrat de circuit CMOS que le capteur d'image 10 et l'unité de commande 20. La colonne dont le code forme la donnée d'image qui est transmise par l'unité de commande 20 à l'unité de traitement d'image 30 est alors déterminée à partir des résultats binaires de variations de points d'image filtrés.

Selon un autre perfectionnement applicable lorsque les éléments de détection de points d'image 11 sont pourvus individuellement de mémoires analogiques 131 a, 131b ou 16, l'unité de traitement d'image 30 peut être agencée en outre pour lire les mémoires analogiques de certains des éléments 11, sélectionnés en fonction de la donnée d'image qui est transmise par l'unité de commande 20 à l'unité de traitement d'image 30. De cette façon, l'information binaire de variation de contenu d'image peut être complétée par une partie du contenu analogique de l'image, ou de la variation de ce contenu. Avantageusement, cette lecture de mémoires analogiques n'est réalisée pour une ligne que si au moins un des résultats binaires de variations de points d'image est positif pour cette ligne, pour ne pas trop réduire la fréquence de production et de traitement des trames. Elle peut en outre être limitée à un nombre restreint de colonnes C autour de (l'une de) celle(s) pour laquelle (lesquelles) le (les) résultat(s) binaire(s) de variation(s) de point(s) d'image est (sont) positif(s). Typiquement, lorsque chaque ligne L est lue selon le mode FIL & LIL, et que des résultats positifs ont été détectés pour deux colonnes C différentes, la lecture des mémoires analogiques peut être limitée au segment de ligne qui est compris entre ces deux colonnes. De cette façon, le procédé de l'invention permet de distinguer entre un seul débris de grande dimension qui occuperait tout le segment de ligne, et plusieurs débris plus petits et séparés qui commenceraient et se termineraient aux deux colonnes identifiées lors de la lecture de la ligne. Une telle lecture des mémoires analogiques 131 a, 131 b ou 16 est réalisée pendant le fonctionnement du mode continu de lecture ligne-à-ligne.

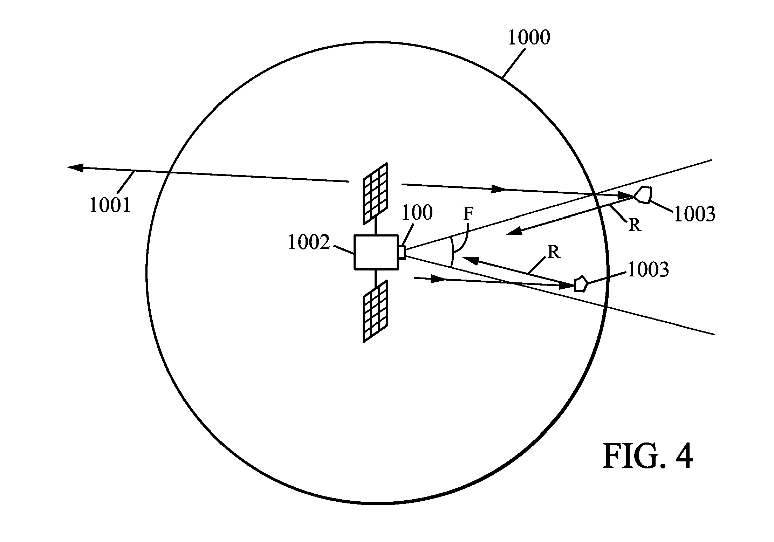

Pour améliorer la détection des débris spatiaux en utilisant un dispositif selon l'invention qui est embarqué à bord d'un satellite terrestre artificiel, il est avantageux que le satellite soit situé à une position héliosynchrone qui est comprise entre 4 heures et 8 heures, ou entre 16 heures et 20 heures, avec le champ d'observation du dispositif 100 qui est orienté à l'opposé du Soleil. En effet, dans une telle configuration, les débris spatiaux qui sont situé dans le champ d'observation sont éclairés par le soleil sur leur face qui est tournée vers le dispositif de détection 100. Cette face apparaît alors lumineuse sur fond d'espace noir, de sorte que le débris spatial présente un contraste important. La figure 4 montre une telle configuration, avec les significations suivantes pour les références indiquées :
- 1000:: la Terre,
- 1001 :: la direction du Soleil,
- 1002 :: le satellite à bord duquel le dispositif 100 de détection de débris spatiaux est embarqué,
- F :: le champ d'observation du dispositif 100 de détection de débris spatiaux,
- 1003 :: un débris spatial, et
- R :: un rayon lumineux participant à la détection du débris spatial 1003.

Le perfectionnement suivant de la détection des débris spatiaux selon la présente invention permet de déterminer de façon plus complète la position d'un débris spatial. Pour cela, au moins deux dispositifs séparés de détection de débris spatiaux sont activés simultanément. Une distance d'éloignement d'un débris spatial peut alors être estimée à partir des données d'images qui sont produites respectivement par ces dispositifs. Dans des premières mises en oeuvre de ce perfectionnement, les deux dispositifs de détection de débris spatiaux peuvent être embarqués à bord du même satellite ou engin spatial, et être situés à distance l'un de l'autre à bord de ce satellite ou engin spatial. L'estimation de la distance d'éloignement du débris peut être réalisée selon le principe de la perception de l'éloignement en vision binoculaire. Dans d'autres mises en oeuvre, les différents dispositifs de détection de débris spatiaux peuvent être embarqués à bord de satellites ou engins spatiaux qui sont distincts. Dans ce cas, la position d'un débris spatial, et en particulier son éloignement par rapport à l'un des deux satellites ou engins spatiaux, peut être déterminée par la méthode de triangulation, par exemple.

## Revendications

1. Dispositif de détection de débris spatiaux (100) destiné à être embarqué à bord d'un satellite ou d'un engin spatial (1002), et comprenant :
- un capteur d'image (10), comprenant lui-même un ensemble d'éléments de détection de points d'image (11) disposés à des intersections de lignes et de colonnes d'une matrice du capteur d'image ;
- une unité de commande (20) adaptée pour contrôler un fonctionnement du capteur d'image selon un mode continu de lecture ligne-à-ligne ; et
- une unité de traitement d'image (30) connectée pour recevoir des données d'image produites par l'unité de commande,
dans lequel chaque élément de détection de point d'image (11) comprend les composants suivants, à l'intérieur du capteur d'image (10) et séparément des autres éléments de détection de points d'image :
- un composant photosensible (12) adapté pour accumuler un signal électrique pendant une durée d'intégration en fonction d'une intensité lumineuse reçue par ledit composant photosensible ;
- un système de soustraction (13) agencé pour produire un signal différentiel correspondant à une différence entre deux signaux électriques accumulés par le composant photosensible pendant deux durées d'intégration successives ;
- un système comparateur (14) adapté pour comparer le signal différentiel avec un seuil, et pour produire un résultat binaire de variation de point d'image ; et
- une mémoire de sortie (15), adaptée pour stocker le résultat binaire de variation de point d'image ;
l'unité de commande (20) étant adaptée pour lire les mémoires de sortie (15) de certains au moins des éléments de détection de points d'image (11) appartenant à une même ligne de la matrice du capteur d'image (10), successivement pour chaque ligne,
et pour déterminer, lorsqu'au moins un résultat binaire de variation de point d'image est positif pour l'un des éléments de détection de points d'image (11) de ladite ligne, la colonne de la matrice du capteur d'image (10) à laquelle appartient ledit élément de détection de point d'image au résultat positif de variation de point d'image,
un code utilisé pour caractériser ladite colonne dans la matrice du capteur d'image (10) formant une donnée d'image transmise par l'unité de commande (20) à l'unité de traitement d'image (30).

2. Dispositif selon la revendication 1, dans lequel chaque élément de détection de point d'image (11) comprend en outre, à l'intérieur du capteur d'image (10) et séparément des autres éléments de détection de points d'image :
- une mémoire analogique (16, 131 a, 131 b) agencée pour stocker le signal électrique accumulé par le composant photosensible (12) dudit élément de détection de point d'image, ou pour stocker le signal différentiel produit par le système de soustraction (13) dudit élément de détection de point d'image.

3. Dispositif selon la revendication 2, dans lequel l'unité de traitement d'image (30) est agencée en outre pour lire pendant le fonctionnement en mode continu de lecture ligne-à-ligne, les mémoires analogiques (16, 131 a, 131b) de certains des éléments de détection de points d'image (11), sélectionnés en fonction de la donnée d'image transmise par l'unité de commande (20) à ladite unité de traitement d'image.

4. Dispositif selon l'une quelconque des revendications précédentes, dans lequel l'unité de commande (20) comprend en outre un module de filtrage (24), agencé pour filtrer spatialement les résultats binaires de variation de points d'image à l'intérieur de chaque ligne,
et la colonne dont le code forme la donnée d'image transmise par l'unité de commande (20) à l'unité de traitement d'image (30) étant déterminée à partir des résultats binaires de variations de points d'images filtrés.

5. Dispositif selon l'une quelconque des revendications précédentes, dans lequel chaque ligne de la matrice du capteur d'image (10) comprend au moins 500 éléments de détection de points d'image (11), et le dispositif (100) est adapté pour traiter une nouvelle ligne d'éléments de détection de points d'image selon une fréquence de traitement de ligne supérieure à 1 MHz.

6. Dispositif selon l'une quelconque des revendications précédentes, dans lequel la matrice du capteur d'image (10) comprend au moins 500 lignes et au moins 500 colonnes d'éléments de détection de points d'image (11), et le dispositif (100) est adapté pour balayer successivement toutes les lignes de ladite matrice du capteur d'image selon une fréquence de trame supérieure à 5 kHz.

7. Dispositif selon l'une quelconque des revendications 1 à 6, dans lequel l'unité de commande (20) est adaptée pour déterminer uniquement la colonne d'un premier élément de détection de point d'image (11) au résultat positif de variation de point d'image, selon un ordre fixé de lecture des éléments dans chaque ligne, ou les colonnes respectives d'un premier et d'un dernier élément de détection de point d'image aux résultats positifs de variations de points d'image, selon deux ordres opposés de lecture des éléments dans chaque ligne.

8. Dispositif selon l'une quelconque des revendications 1 à 6, dans lequel l'unité de commande (20) est adaptée pour traiter chaque ligne selon une division de ligne en segments fixés, et pour déterminer séparément et en parallèle à l'intérieur de chaque segment la colonne de la matrice du capteur (10) d'image à laquelle appartient au moins un élément de détection de point d'image (11) au résultat positif de variation de point d'image.

9. Dispositif selon la revendication 8, dans lequel l'unité de commande (20) est adaptée pour déterminer uniquement la colonne d'un premier élément de détection de point d'image (11) au résultat positif de variation de point d'image, selon un ordre fixé de lecture des éléments à l'intérieur de chaque segment, ou d'un premier et d'un dernier élément de détection de point d'image aux résultats positifs de variations de points d'image, selon deux ordres opposés de lecture des éléments à l'intérieur de chaque segment.

10. Dispositif selon l'une quelconque des revendications précédentes, dans lequel l'unité de traitement d'image (30) comprend plusieurs sous-unités de traitement (30a, 30b) affectées respectivement à des sous-ensembles complémentaires de lignes de la matrice du capteur d'image (10).

11. Dispositif selon l'une quelconque des revendications précédentes, dans lequel le capteur d'image (10) est sensible pour un rayonnement de longueur d'onde comprise entre 0,4 µm et 0,8 µm.

12. Procédé de détection de débris spatiaux comprenant les étapes suivantes :
- embarquer au moins un dispositif de détection de débris spatiaux (100) selon l'une quelconque des revendications 1 à 11, à bord d'un satellite ou d'un engin spatial (1002) ;
- orienter un champ d'observation du dispositif (100) de sorte que le capteur d'image (10) reçoive un rayonnement produit par le Soleil et réfléchi ou diffusé par un débris spatial (1003) situé dans le champ d'observation ; et
- activer le dispositif de détection des débris spatiaux (100) de sorte que le débris spatial (1003) provoque un résultat positif de variation de point d'image pour au moins un élément de détection de point d'image (11).

13. Procédé selon la revendication 12, suivant lequel au moins deux dispositifs séparés de détection de débris spatiaux sont activés simultanément, et suivant lequel une distance d'éloignement d'un débris spatial est en outre estimée à partir des données d'images qui sont produites respectivement par lesdits dispositifs.

14. Procédé selon la revendication 13, suivant lequel les dispositifs de détection de débris spatiaux sont embarqués à bord du même satellite ou engin spatial, et sont situés à distance l'un de l'autre à bord dudit satellite ou engin spatial.

15. Procédé selon la revendication 13, suivant lequel les dispositifs de détection de débris spatiaux sont embarqués à bord de satellites ou engins spatiaux distincts.

16. Procédé selon les revendications 12-15 suivant lequel le dispositif de détection de débris spatiaux (100) est embarqué à bord d'un satellite terrestre artificiel (1002) situé à une position héliosynchrone comprise entre 4 heures et 8 heures, ou entre 16 heures et 20 heures, avec le champ d'observation du dispositif de détection de débris spatiaux qui est orienté à l'opposé du Soleil.

## Patentansprüche

1. Vorrichtung zur Detektion von Weltraumschrott (100), das für die Mitführung an Bord eines Satelliten oder eines Raumfahrzeugs (1002) vorgesehen ist, umfassend:
- einen Bildsensor (10), der seinerseits eine Anordnung von Bildpunktdetektionselementen (11), die an Schnittstellen von Zeilen und Spalten einer Matrix des Bildsensors angeordnet sind, umfasst;
- eine Steuereinheit (20), die geeignet ist, einen Betrieb des Bildsensors in einem kontinuierlichen zeilenweisen Lesemodus zu steuern; und
- eine Bildbearbeitungseinheit (30), die angeschlossen ist, um von der Steuereinheit erzeugte Bilddaten zu empfangen,
wobei jedes Bildpunktdetektionselement (11) innerhalb des Bildsensors (10) und getrennt von den anderen Bildpunktdetektionselementen die folgenden Komponenten umfasst:
- eine lichtempfindliche Komponente (12), die geeignet ist, während eines Integrationszeitraums ein elektrisches Signal entsprechend einer von der lichtempfindlichen Komponente empfangenen Lichtstärke zu akkumulieren;
- ein Subtraktionssystem (13), das eingerichtet ist, ein Differenzsignal zu erzeugen, das einer Differenz zwischen zwei elektrischen Signalen, die während zweier aufeinanderfolgender Integrationszeiträume von der lichtempfindlichen Komponente akkumuliert wurden, entspricht;
- ein Vergleichssystem (14), das geeignet ist, das Differenzsignal mit einem Grenzwert zu vergleichen und ein binäres Bildpunktvariationsergebnis zu erzeugen; und
- einen Ausgangsspeicher (15), der geeignet ist, das binäre Bildpunktvariationsergebnis zu speichern;
wobei die Steuereinheit (20) geeignet ist, nacheinander für jede Zeile die Ausgangsspeicher (15) zumindest einiger der Bildpunkterkennungselemente (11), die zu einer gleichen Zeile der Matrix des Bildsensors (10) gehören, zu lesen und, wenn zumindest ein binäres Bildpunktvariationsergebnis für eines der Bildpunktdetektionselemente (11) der Zeile positiv ist, die Spalte der Matrix des Bildsensors (10), zu der das Bildpunktdetektionselement mit dem positiven Bildpunktvariationsergebnis gehört, zu bestimmen,
wobei ein Code, der zur Charakterisierung der Spalte in der Matrix des Bildsensors (10) genutzt wird, Bilddaten bildet, die von der Steuereinheit (20) an die Bildbearbeitungseinheit (30) übertragen werden.

2. Vorrichtung nach Anspruch 1, wobei jedes Bildpunktdetektionselement (11) innerhalb des Bildsensors (10) und getrennt von den anderen Bildpunktdetektionselementen ferner Folgendes umfasst:
- einen Analogspeicher (16, 131a, 131b), der eingerichtet ist, das von der lichtempfindlichen Komponente (12) des Bildpunktdetektionselements akkumulierte elektrische Signal zu speichern oder das vom Subtraktionssystem (13) des Bildpunktdetektionselements erzeugte Differenzsignal zu speichern.

3. Vorrichtung nach Anspruch 2, wobei die Bildbearbeitungseinheit (30) ferner eingerichtet ist, während des Betriebs im kontinuierlichen zeilenweisen Lesemodus die analogen Speicher (16, 131a, 131b) einiger Bildpunktdetektionselemente (11), die entsprechend den von der Steuereinheit (20) an die Bildbearbeitungseinheit übertragenen Bilddaten ausgewählt wurden, zu lesen.

4. Vorrichtung nach einem der vorangehenden Ansprüche, wobei die Steuereinheit (20) ferner ein Filtermodul (24) umfasst, das eingerichtet ist, die binären Bildpunktvariationsergebnisse innerhalb jeder Zeile räumlich zu filtern,
und wobei die Spalte, deren Code die von der Steuereinheit (20) an die Bildbearbeitungseinheit (30) übertragenen Bilddaten bildet, anhand der gefilterten binären Bildpunktvariationsergebnisse bestimmt wird.

5. Vorrichtung nach einem der vorangehenden Ansprüche, wobei jede Zeile der Matrix des Bildsensors (10) zumindest 500 Bildpunktdetektionselemente (11) umfasst und die Vorrichtung (100) geeignet ist, eine neue Zeile von Bildpunktdetektionselementen in einer Zeilenbearbeitungsfrequenz von über 1 MHz zu bearbeiten.

6. Vorrichtung nach einem der vorangehenden Ansprüche, wobei die Matrix des Bildsensors (10) zumindest 500 Zeilen und zumindest 500 Spalten von Bildpunktdetektionselementen (11) umfasst und die Vorrichtung (100) geeignet ist, nacheinander alle Zeilen der Matrix des Bildsensors mit einer Bildfrequenz von über 5 kHz abzutasten.

7. Vorrichtung nach einem der Ansprüche 1 bis 6, wobei die Steuereinheit (20) geeignet ist, ausschließlich die Spalte eines ersten Bildpunktdetektionselements (11) mit positivem Bildpunktvariationsergebnis in einer feststehenden Reihenfolge zum Lesen der Elemente in jeder Zeile oder die jeweiligen Spalten eines ersten und eines letzten Bildpunktdetektionselements mit positivem Bildpunktvariationsergebnis in zwei entgegengesetzten Reihenfolgen zum Lesen der Elemente in jeder Zeile zu bestimmen.

8. Vorrichtung nach einem der Ansprüche 1 bis 6, wobei die Steuereinheit (20) geeignet ist, jede Zeile entsprechend einer Zeilenaufteilung in feststehende Segmente zu bearbeiten und die Spalte der Matrix des Bildsensors (10), zu der zumindest ein Bildpunktdetektionselement (11) mit positivem Bildpunktvariationsergebnis gehört, einzeln und parallel innerhalb jedes Segments zu bestimmen.

9. Vorrichtung nach Anspruch 8, wobei die Steuereinheit (20) geeignet ist, ausschließlich die Spalte eines ersten Bildpunktdetektionselements (11) mit positivem Bildpunktvariationsergebnis in einer feststehenden Reihenfolge zum Lesen der Elemente innerhalb jedes Segments oder eines ersten und eines letzten Bildpunktdetektionselements mit positivem Bildpunktvariationsergebnis in zwei entgegengesetzten Reihenfolgen zum Lesen der Elemente innerhalb jedes Segments zu bestimmen.

10. Vorrichtung nach einem der vorangehenden Ansprüche, wobei die Bildbearbeitungseinheit (30) mehrere Bearbeitungsuntereinheiten (30a, 30b) umfasst, die jeweils ergänzenden Untereinheiten von Zeilen der Matrix des Bildsensors (10) zugeordnet sind.

11. Vorrichtung nach einem der vorangehenden Ansprüche, wobei der Bildsensor (10) gegenüber einer Strahlung mit einer Wellenlänge von 0,4 µm bis 0,8 µm empfindlich ist.

12. Verfahren zur Detektion von Weltraumschrott, umfassend die folgenden Schritte:
- das Mitführen zumindest einer Vorrichtung zur Detektion von Weltraumschrott (100) nach einem der Ansprüche 1 bis 11 an Bord eines Satelliten oder eines Raumfahrzeugs (1002);
- das Ausrichten eines Beobachtungsfelds der Vorrichtung (100), sodass der Bildsensor (10) eine von der Sonne erzeugte und durch im Beobachtungsfeld befindlichen Weltraumschrott (1003) reflektierte oder gestreute Strahlung empfängt; und
- das Aktivieren der Vorrichtung (100) zur Detektion von Weltraumschrott, sodass der Weltraumschrott (1003) ein positives Bildpunktvariationsergebnis für zumindest ein Bildpunktdetektionselement (11) bewirkt.

13. Verfahren nach Anspruch 12, wonach zumindest zwei getrennte Vorrichtungen zur Detektion von Weltraumschrott gleichzeitig aktiviert werden und wonach eine Entfernung von Weltraumschrott ferner anhand der Bilddaten, die jeweils von den Vorrichtungen erzeugt werden, geschätzt wird.

14. Verfahren nach Anspruch 13, wonach die Vorrichtungen zur Detektion von Weltraumschrott an Bord desselben Satelliten bzw. Raumfahrzeugs mitgeführt werden und an Bord des Satelliten bzw. Raumfahrzeugs beabstandet voneinander angeordnet sind.

15. Verfahren nach Anspruch 13, wonach die Vorrichtungen zur Detektion von Weltraumschrott an Bord getrennter Satelliten oder Raumfahrzeuge mitgeführt werden.

16. Verfahren nach Ansprüchen 12 - 15, wonach die Vorrichtung zur Detektion von Weltraumschrott (100) an Bord eines künstlichen Erdsatelliten (1002) mitgeführt wird, der sich in einer sonnensynchronen Position zwischen 4 Uhr und 8 Uhr oder zwischen 16 Uhr und 20 Uhr befindet, wobei das Beobachtungsfeld der Vorrichtung zur Detektion von Weltraumschrott entgegen der Sonne ausgerichtet ist.

## Claims

1. Device (100) for detecting space debris, designed to be carried on board a satellite or a spacecraft (1002) and comprising:
- an image sensor (10), in turn comprising a set of pixel detection elements (11) arranged at intersections of rows and columns of a matrix of the image sensor;
- a control unit (20) configured to control operation of the image sensor based on a continuous row-by-row reading mode; and
- an image processing unit (30) connected so as to receive image data produced by the control unit,
wherein each pixel detection element (11) comprises the following components, inside the image sensor (10) and separately from the other pixel detection elements:
- a photosensitive component (12) configured to accumulate an electric signal during an integration period as a function of a light intensity received by said photosensitive component;
- a subtraction system (13) configured to produce a differential signal corresponding to a difference between two electric signals collected by the photosensitive component during two successive integration periods;
- a comparator system (14) configured to compare the differential signal with a threshold and produce a binary pixel variation result; and
- an output memory (15) configured to store the binary pixel variation result;
the control unit (20) being configured to read the output memories (15) of at least some of the pixel detection elements (11) belonging to a same row of the matrix of the image sensor (10), in succession for each row, and, if at least one binary pixel variation result is positive for one of the pixel detection elements (11) of said row, determining the column of the matrix of the image sensor (10) to which said pixel detection element having the positive pixel variation result belongs,
a code used to characterize said column in the matrix of the image sensor (10) forming an image datum transmitted by the control unit (20) to the image processing unit (30).

2. Device as claimed in claim 1, wherein each pixel detection element (11) further comprises, inside the image sensor (10) and separately from the other pixel detection elements:
- an analog memory (16, 131 a, 131b) configured to store the electric signal accumulated by the photosensitive component (12) of said pixel detection element, or to store the differential signal produced by the subtraction system (13) of said pixel detection element.

3. Device as claimed in claim 2, wherein the image processing unit (30) is further configured to read, during operation in the continuous row-by-row reading mode, the analog memories (16, 131 a, 131b) of some of the pixel detection elements (11), selected as a function of the image datum transmitted by the control unit (20) to said image processing unit.

4. Device as claimed in any one of the preceding claims, wherein the control unit (20) further comprises a filtering module (24) configured to spatially filter the binary variation results of pixels within each row,
and the column whose code forms the image datum transmitted by the control unit (20) to the image processing unit (30) is determined on the basis of the filtered binary pixel variation results.

5. Device as claimed in any one of the preceding claims, wherein each row of the matrix of the image sensor (10) comprises at least 500 pixel detection elements (11) and the device (100) is configured to process a new row of pixel detection elements at a row processing frequency greater than 1 MHz.

6. Device as claimed in any one of the preceding claims, wherein the matrix of the image sensor (10) comprises at least 500 rows and at least 500 columns of pixel detection elements (11) and the device (100) is configured to scan all the rows of said matrix of the image sensor in succession at a frame frequency greater than 5 kHz.

7. Device as claimed in any one of claims 1 to 6, wherein the control unit (20) is configured to determine only the column of a first pixel detection element (11) having positive pixel variation result, according to a fixed order in which the elements in each row are read, or the respective columns of a first and a last pixel detection element having positive pixel variation results, according to two opposite orders in which elements in each row are read.

8. Device as claimed in any one of claims 1 to 6, wherein the control unit (20) is configured to process each row based on a row division into fixed segments, and to determine separately and in parallel within each segment the column of the matrix of the image sensor (10) to which at least one pixel detection element (11) having the positive pixel variation belongs.

9. Device as claimed in claim 8, wherein the control unit (20) is configured to determine only the column of a first pixel detection element (11) having positive pixel variation result according to a fixed order in which elements within each segment are read, or a first and a last pixel detection element having positive pixel variation results according to two opposite orders in which elements within each segment are read.

10. Device as claimed in any one of the preceding claims, wherein the image processing unit (30) comprises several processing sub-units (30a, 30b) respectively assigned to complementary sub-units of rows of the matrix of the image sensor (10).

11. Device as claimed in any one of the preceding claims, wherein the image sensor (10) is sensitive to a radiation having a wavelength of between 0.4 µm and 0.8 µm.

12. Method of detecting space debris comprising the following steps:
- loading at least one space debris detection device (100) as claimed in any one of claims 1 to 11, on board a satellite or a spacecraft (1002);
- orienting an observation field of the device (100) so that the image sensor (10) receives a radiation generated by the sun and reflected or diffused by a space debris item (1003) located within the observation field; and
- activating the space debris detection device (100) so that the space debris item (1003) causes a positive pixel variation result for at least one pixel detection element (11).

13. Method as claimed in claims 12, whereby at least two separate space debris detection devices are activated simultaneously, and whereby a distance to a space debris item is estimated on the basis of image data produced respectively by said devices.

14. Method as claimed in claim 13, whereby the space debris detection devices are loaded on board one same satellite or spacecraft and are located at a distance from one another on board said satellite or spacecraft.

15. Method as claimed in claim 13, whereby the space debris detection devices are loaded on board separate satellites or spacecrafts.

16. Method as claimed in claims 12-15, whereby the space debris detection device (100) is loaded on board an artificial terrestrial satellite (1002) located in a heliosynchronous position of between 4 hours and 8 hours, or between 16 hours and 20 hours, with the observation field of the space debris detection device which is oriented opposite the sun.
